# EUROPEAN PATENT APPLICATION

(11) **EP 4 517 989 A1**
(43) Date of publication of application: **05.03.2025**
(21) Application number: 23843392.4
(22) Date of filing: 19.07.2023
(51) Int. Cl.: H01M 50/367, H01M 50/107, H01M 50/167, H01M 50/242

(54) **BATTERY, AND BATTERY PACK AND VEHICLE COMPRISING SAME**

(30) Priority: 19.07.2022 KR 20220089219
(71) Applicant: LG Energy Solution, Ltd., Seoul 07335 (KR)
(72) Inventor: PARK, Sang-Jin, Daejeon 34122 (KR); KIM, Ji-Hwan, Daejeon 34122 (KR); WOO, Jae-Young, Daejeon 34122 (KR); LEE, Kwan-Hee, Daejeon 34122 (KR); LEE, Byoung-Gu, Daejeon 34122 (KR); LEE, Jun-Su, Daejeon 34122 (KR)
(74) Representative: Goddar, Heinz J.
(86) International application number: PCT/KR2023/010444
(87) International publication number: WO 2024/019546

(57) **Abstract**

The present disclosure discloses a battery having a structure in which a protection member is applied between an electrode assembly and a beading portion. The battery according to one aspect of the present disclosure includes an electrode assembly; a battery housing having an opening formed on one side to accommodate the electrode assembly through the opening and including a beading portion formed by press-fitting the perimeter of an outer circumference at the opening; a top cap configured to cover the opening; and a first protection member interposed between the beading portion and the electrode assembly.

## Description

### TECHNICAL FIELD

The present disclosure relates to a battery having a structure in which a protection member is applied between an electrode assembly and a beading portion, and a battery pack and a vehicle including the same.

The present application claims priority to Korean Patent Application No. 10-2022-0089219 filed on July 19, 2022 in the Republic of Korea, the disclosures of which are incorporated herein by reference.

### BACKGROUND ART

Batteries have high applicability according to product groups and electrical characteristics such as high energy density, and thus, are commonly applied not only to mobile devices but also to electric vehicles (EVs) or hybrid vehicles (HEVs) driven by electric power sources.

Because batteries have primary advantage of radically reducing the use of fossil fuel as well as secondary advantage of generating no by-products that come with energy consumption, the batteries are gaining attention as a new alternative energy source for improving eco-friendliness and energy efficiency.

Types of batteries that are currently widely used include lithium-ion batteries, lithium polymer batteries, nickel cadmium batteries, nickel hydride batteries, and nickel zinc batteries. An operating voltage of a unit battery cell ranges from about 2.5 V to about 4.5 V. Accordingly, when a higher output voltage is required, a battery pack is configured by connecting a plurality of batteries in series. Also, a battery pack may be configured by connecting a plurality of batteries in parallel according to charge/discharge capacity required for the battery pack. Accordingly, the number of batteries included in a battery pack and their electric connection pattern may be set in various ways according to a required output voltage and/or charge/discharge capacity.

Recently, development is underway to increase the cell size to realize high energy density and reduce costs of battery packs.

In order to improve energy density, the size of the electrode assembly must be increased as much as possible to maximize capacity. To achieve this, it is necessary to maximize the internal space by making the battery housing as thin as possible.

However, if the thickness of the battery housing is too thin, it is disadvantageous in terms of durability of the battery housing, and the battery housing may fracture or tear in the thinned area.

In particular, the beading portion formed by press-fitting the perimeter of the battery housing to prevent the electrode assembly from coming off at the opening of the battery housing may be more vulnerable because it is a place where deformation has occurred once. Additionally, due to stretching of the battery housing by press-fitting, some of the areas where the beading portion of the battery housing is formed may become thinner compared to the surrounding area.

This beading portion had a problem that it is damaged by flame and/or gas or a pin hole is formed when a thermal event occurs inside the battery.

Therefore, in order to solve this problem, it is necessary to protect the beading portion from flame and/or gas inside.

### DISCLOSURE

### Technical Problem

The present disclosure is designed to solve the problems of the related art, and therefore the present disclosure is directed to preventing deformation and damage of the beading portion by protecting the beading portion, which may be structurally weak, from flame and/or gas inside.

In another aspect, the present disclosure is directed to preventing structural collapse by preventing the formation of pin holes in the beading portion when flame occurs inside.

In still another aspect, the present disclosure is directed to protecting the beading portion without blocking the flame and gas discharge passage in the center of the electrode assembly when flame occurs inside.

However, the technical problem to be solved by the present disclosure is not limited to the above-mentioned problem, and other problems not mentioned will be clearly understood by those skilled in the art from the present disclosure described below.

### Technical Solution

A battery according to an embodiment of the present disclosure to accomplish the above object may comprise: an electrode assembly; a battery housing having an opening formed on one side to accommodate the electrode assembly through the opening and including a beading portion formed by press-fitting the perimeter of an outer circumference at the opening; a top cap configured to cover the opening; and a first protection member interposed between the beading portion and the electrode assembly.

The first protection member may contain a heat-resistant material.

The first protection member may have an outer diameter that is substantially the same as the inner diameter of the battery housing.

The first protection member may have a center hole.

The first protection member may have a width corresponding to the depth at which the beading portion is press-fitted.

The first protection member may extend along the circumferential direction of the battery housing.

The center hole of the first protection member may have a diameter that is substantially the same as the inner diameter of the battery housing in the area where the beading portion is formed.

The battery may further comprise a first current collector, which includes a first coupling portion electrically coupled to the electrode assembly at the opening; and a housing coupling portion that is electrically coupled to the battery housing.

The first coupling portion may be in contact with the first protection member on one side of the electrode assembly.

The first current collector may be formed integrally with the first protection member.

A battery pack according to the present disclosure may comprise the battery according to the present disclosure.

A vehicle according to the present disclosure may comprise the battery pack according to the present disclosure.

### Advantageous Effects

According to one aspect of the present disclosure, the first protection member can protect the beading portion. By protecting the beading portion, which may be structurally weak, from flame and/or gas inside the battery, deformation and damage to the beading portion can be prevented. If a flame occurs inside the battery, the first protection member with heat resistance can prevent structural collapse by preventing pin holes from being created in the beading portion. In addition, the first protection member with approximately donut shape can protect the beading portion without blocking the flame and gas discharge passage at the center of the electrode assembly. Ultimately, stability of the battery can be greatly improved.

According to another aspect of the present disclosure, the area of the beading portion protected by the second protection member is the area deepest press-fitted toward the winding axis and corresponds to the area with the thinnest thickness due to stretching. Therefore, the second protection member can protect the beading portion more effectively. If a flame occurs inside the battery, the second protection member with heat resistance can prevent structural collapse by preventing pin holes from being created in the innermost surface of the beading portion. Additionally, the second protection member may guide the movement path of the gas and/or flame. Gas and/or flame whose movement direction is primarily restricted by the first protection member can be directed toward the top cap through the second protection member. Therefore, gas and/or flame can be effectively discharged to the vent portion of the top cap, which will be described later.

### DESCRIPTION OF DRAWINGS

FIG. 1 is a drawing showing an electrode included in a battery according to an embodiment of the present disclosure.
FIG. 2 is a diagram showing a stack of electrode assemblies included in a battery according to an embodiment of the present disclosure.
FIG. 3 is a diagram showing the battery according to an embodiment of the present disclosure.
FIG. 4 is a diagram showing a cross section of the battery according to an embodiment of the present disclosure.
FIG. 5 is a diagram showing a first protection member included in the battery according to an embodiment of the present disclosure.
FIG. 6 is a diagram showing the flow of gas and flame inside the battery according to an embodiment of the present disclosure.
FIG. 7 is a diagram showing a battery according to another embodiment of the present disclosure.
FIG. 8 is a diagram showing a first protection member and a second protection member included in the battery according to another embodiment of the present disclosure.
FIG. 9 is a diagram showing a first current collector and a first protection member included in the battery according to an embodiment of the present disclosure.
FIG. 10 is a diagram showing a first current collector, a first protection member and a second protection member included in the battery according to another embodiment of the present disclosure.
FIG. 11 is a diagram showing a battery pack according to the present disclosure.
FIG. 12 is a drawing showing a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and together with the foregoing disclosure, serve to provide further understanding of the technical features of the present disclosure, and thus, the present disclosure is not construed as being limited to the drawings. Like reference numerals refer to like elements. Additionally, in the drawings, the thickness, proportions and dimensions of components are exaggerated for effective explanation of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In this specification, terms indicating directions such as up, down, left, right, front, and back are used, but it is obvious to those skilled in the art of the present disclosure that these terms are only for convenience of explanation and they may vary depending on the location of the target object or the location of the observer.

Accordingly, the embodiments described in this specification and the configurations shown in the drawings are only one of the most preferred embodiments of the present disclosure and do not represent all technical details of the present disclosure, so it should be understood that there may be various equivalents and variations that can be replaced at the time of filing this application.

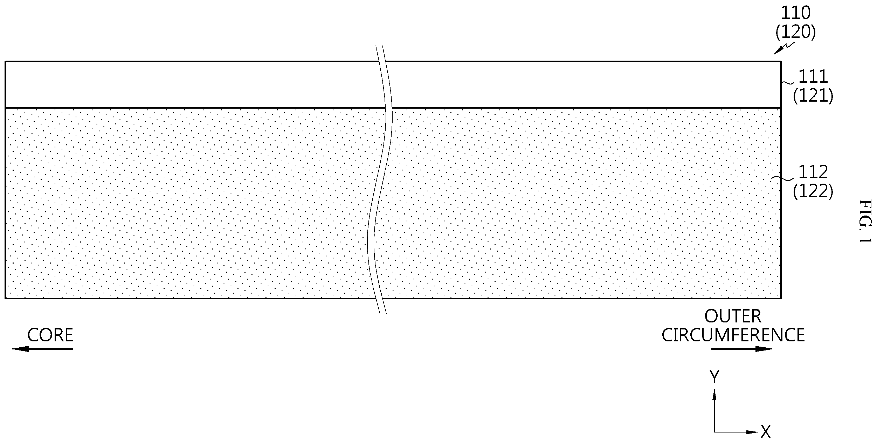

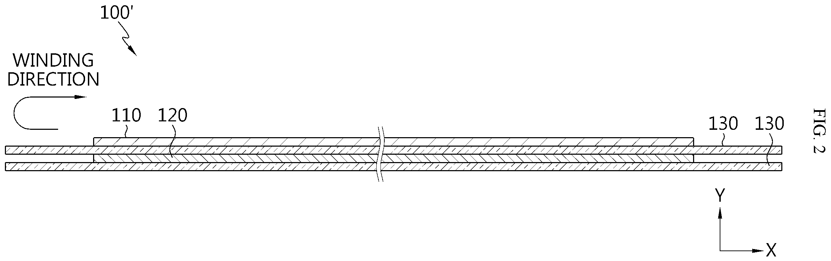

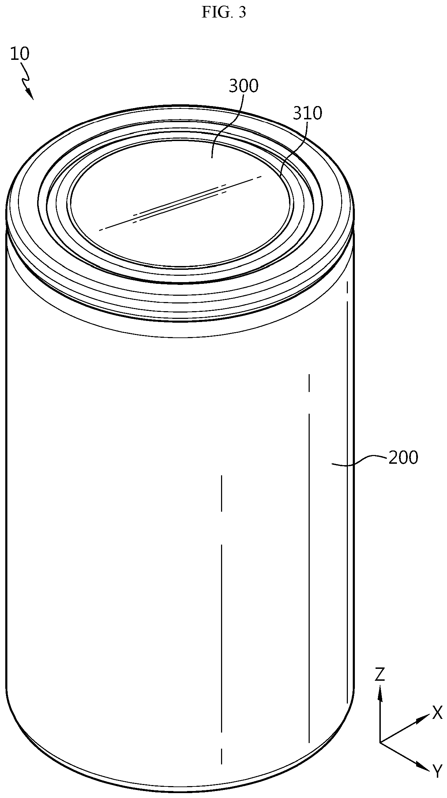

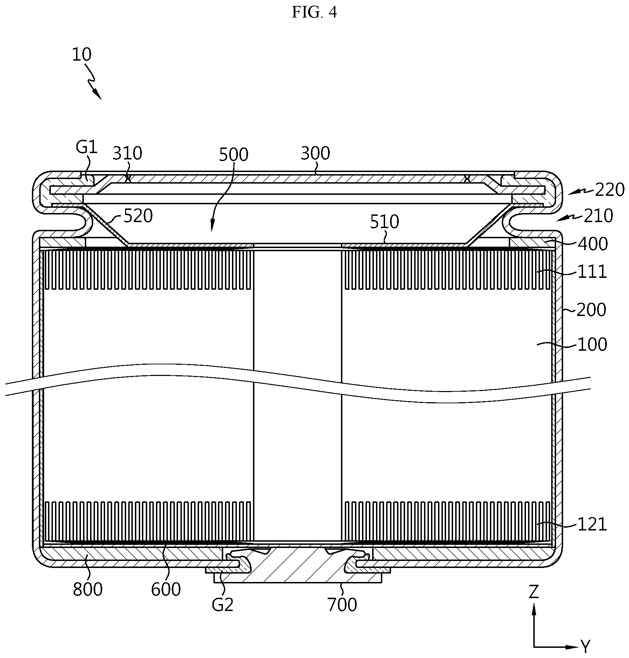

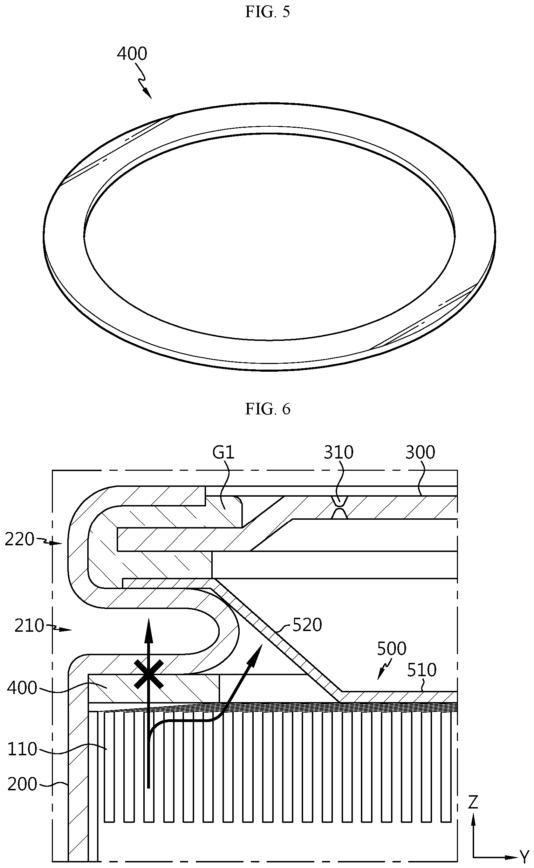

FIG. 1 is a drawing showing an electrode 110, 120 included in a battery 10 according to an embodiment of the present disclosure. FIG. 2 is a diagram showing a stack 100' of electrode assemblies 100 included in the battery 10 according to an embodiment of the present disclosure. FIG. 3 is a diagram showing a cross section of the battery 10 according to an embodiment of the present disclosure. FIG. 4 is a drawing showing a battery 10 according to an embodiment of the present disclosure. FIG. 5 is a diagram showing a first protection member 400 included in the battery 10 according to an embodiment of the present disclosure.

Referring to FIGS. 1 to 5, the battery 10 according to the present disclosure may include an electrode assembly 100, a battery housing 200, a top cap 300, and a first protection member 400.

The electrode assembly 100 may be formed by winding a stack 100' including a first electrode 110, a second electrode 120, and a separator 130 around the winding axis.

The stack 100', which includes the first electrode 110 including a first uncoated portion 111 not coated with an active material layer along the winding direction, the second electrode 120 including a second uncoated portion 121 not coated with an active material layer along the winding direction, and the separator 130 interposed between them, may be wound around a common winding axis to form a core and an outer circumference.

The first electrode 110 may include a first electrode plate and a first electrode active material layer 112 formed by applying a first electrode active material on at least one surface of the first electrode plate. The second electrode 120 may include a second electrode plate and a second active material layer 122 formed by applying a second electrode active material on at least one side of the second electrode plate. The first electrode 110 may include a first uncoated portion 111 on which a positive electrode active material or a negative electrode active material is not applied to the electrode plate. The second electrode 120 may include a second uncoated portion 121 on which a positive electrode active material or a negative electrode active material is not applied to the electrode plate. For example, the first uncoated portion 111 may be provided at the top of the electrode assembly 100, and the second uncoated portion 121 may be provided at the bottom of the electrode assembly 100. At least a part of the first uncoated portion 111 may function as a first electrode tab, and at least a part of the second uncoated portion 121 may function as a second electrode tab. Meanwhile, in the present disclosure, the electrode tab is not limited to being at least part of the uncoated portion. That is, an electrode tab may be provided separately and coupled to the uncoated portion.

The battery housing 200 may have an opening formed on one side. The battery housing 200 may accommodate the electrode assembly 100 through the opening. The battery housing 200 may have the polarity of the first electrode. The battery housing 200 may be made of a conductive metal material. The battery housing 200 may also accommodate an electrolyte through the opening.

The battery housing 200 may include a beading portion 210. The beading portion 210 is formed at the end adjacent to the opening and may be press-fitted inward. The beading portion 210 may have a shape in which the perimeter of the outer circumference of the battery housing 200 is press-fitted to a predetermined depth. The beading portion 210 may be formed on the upper part of the electrode assembly 100. The beading portion 210 may serve to prevent the electrode assembly 100 from moving in the height direction.

The top cap 300 may be configured to cover the opening. The top cap 300 may be configured to have no polarity. The top cap 300 may be made of a conductive metal material.

The first protection member 400 may be interposed between the beading portion 210 and the electrode assembly 100. The outer diameter of the first protection member 400 may be substantially the same as the inner diameter of the battery housing 200. The first protection member 400 may be fitted inside the battery housing 200. The first protection member 400 may be interposed between the beading portion and at least some of the areas of one side of the electrode assembly 100 corresponding to the beading portion 210.

The first protection member 400 may have a center hole. The diameter of the center hole of the first protection member 400 may be substantially the same as the inner diameter of the battery housing 200 in the area where the beading portion 210 is formed. The first protection member 400 may have a width corresponding to the depth at which the beading portion 210 is press-fitted. In other words, the diameter of the center hole may be approximately equal to the length obtained by subtracting twice of the length at which the beading portion 210 of the battery housing 200 is press-fitted from the outer diameter of the first protection member 400 of the battery 10. The first protection member 400 may be roughly shaped like a donut. However, in the present disclosure, the case where the width of the first protection member 400 is greater than the press-fit depth of the beading portion 210 is not excluded. The first protection member 400 may extend along the circumferential direction of the battery housing 200.

The first protection member 400 may contain a heat-resistant material.

The beading portion 210 is vulnerable to deformation because it is a place where deformation has occurred due to press-fitting, and since stretching of the battery housing 200 occurs in the area where the beading portion 210 is formed due to press-fitting, the thickness of the battery housing 200 may be smaller than the surrounding area. This beading portion 210 had a problem in that it is damaged by flame and/or gas or a pin hole is created when a thermal event occurs inside the battery 10.

FIG. 6 is a diagram showing the flow of gas and flame inside the battery 10 according to an embodiment of the present disclosure.

Looking at this structure of the present disclosure with reference to FIG. 6, the first protection member 400 may protect the beading portion 210. By protecting the beading portion 210, which may be structurally weak, from flame and/or gas inside the battery 10, deformation and damage to the beading portion 210 may be prevented. If a flame occurs inside the battery 10, the first protection member 400 with heat resistance may prevent structural collapse by preventing pin holes from being created in the beading portion 210. In addition, the beading portion 210 may be protected without blocking the flame and gas discharge passage at the center of the electrode assembly 100 through the first protection member 400, which is approximately donut-shaped. Ultimately, the stability of the battery 10 may be greatly improved.

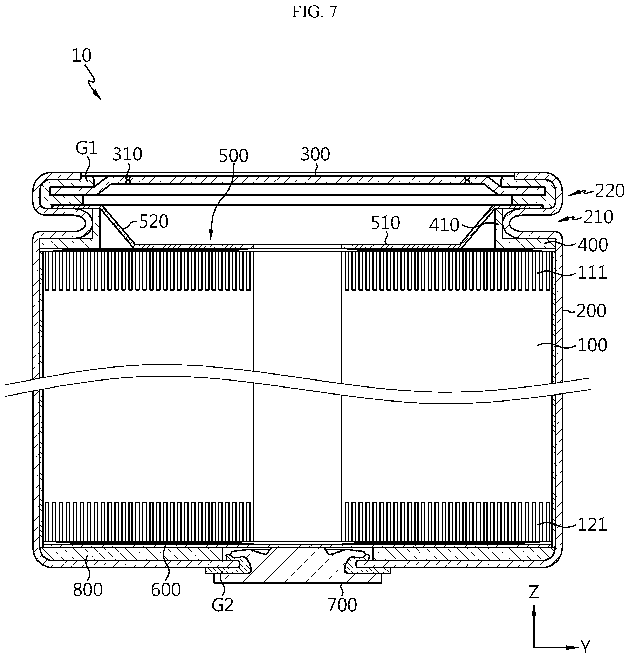

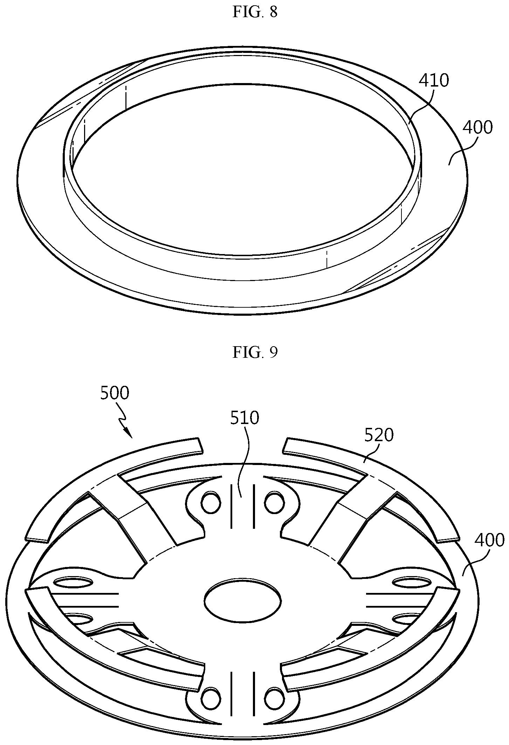

FIG. 7 is a diagram showing a battery 10 according to another embodiment of the present disclosure. FIG. 8 is a diagram showing a first protection member 400 and a second protection member 410 included in the battery 10 according to another embodiment of the present disclosure.

Referring to FIGS. 7 and 8, the battery 10 according to the present disclosure may include a second protection member 410.

The second protection member 410 may be formed along the inner surface of the beading portion 210 closest to the winding axis. The second protection member 410 may extend in the height direction of the battery 10 to a height substantially equal to the height of the beading portion 210. The second protection member 410 may extend along the circumferential direction of the battery housing 200. The second protection member 410 may have a diameter that is approximately the same as the inner diameter of the battery housing 200 in the area where the beading portion 210 is formed. The second protection member 410 may be inserted into the deepest press-fit portion of the beading portion 210 toward the winding axis.

The second protection member 410 may be heat resistant.

The second protection member 410 may be connected to the first protection member 400. The second protection member 410 may be formed integrally with the first protection member 400. The portion where the second protection member 410 and the first protection member 400 are connected may have a curvature that substantially corresponds to the curvature of the beading portion 210.

According to this configuration in the present disclosure, the part of the beading portion 210 protected by the second protection member 410 is the area deepest press-fitted toward the winding axis and corresponds to the area with the thinnest thickness due to stretching. Therefore, the second protection member 410 may protect the beading portion 210 more effectively. If a flame occurs inside the battery 10, the second protection member 410 with heat resistance may prevent pin holes from being created on the innermost surface of the beading portion 210, thereby preventing structural collapse. Additionally, the second protection member 410 may guide the movement path of gas and/or flame. Gas and/or flame whose movement direction is primarily restricted by the first protection member 400 can be directed toward the top cap 300 through the second protection member 410. Therefore, gas and/or flame can be effectively discharged through the vent portion 310 of the top cap 300, which will be described later.

Referring back to FIG. 4, the battery 10 may include a crimping portion 220 of the battery housing 200 and/or a vent portion 310 and/or a terminal 700 of the top cap 300 and/or a first current collector 500 and/or a second current collector 600 and/or an insulator 800 and/or a first gasket G1 and/or a second gasket G2.

The battery housing 200 may include a crimping portion 220. The crimping portion 220 may be formed on the upper portion of the beading portion 210. The crimping portion 220 may be extended and bent to surround the edge area of the top cap 300. The top cap 300 may be fixed on the beading portion 210 by the shape of the crimping portion 220.

The top cap 300 may have a vent portion 310 that is weakly configured compared to the surrounding area. The vent portion 310 may have a thinner thickness compared to the surrounding area. The vent portion 310 may be formed by partially reducing the thickness of the top cap 300 by notching on one or both sides of the top cap 300.

The terminal 700 may be located on the opposite side of the opening. The terminal 700 may be exposed to the outside of the battery housing 200 through a closed portion located on the opposite side of the opening. The terminal 700 may have the polarity of the second electrode. The terminal 700 may penetrate approximately the center of the lower surface of the battery housing 200.

The first current collector 500 may be located between the electrode assembly 100 and the top cap 300. The first current collector 500 may have a first coupling portion 510 that is electrically coupled to the electrode assembly 100. The first current collector 500 may be provided with a housing coupling portion 520 that is electrically coupled to the battery housing 200 on the inner surface of the battery housing 200. The first current collector 500 may have the polarity of the first electrode.

The second current collector 600 may be located between the electrode assembly 100 and the terminal 700. The second current collector 600 may have a second coupling portion that is electrically coupled to the electrode assembly 100. The second current collector 600 may be provided with a terminal 700 coupling portion that is electrically coupled to a portion where the terminal 700 is inserted into the battery housing 200 and has a substantially flat surface. The second current collector 600 may have the polarity of the second electrode.

The insulator 800 may be located on the electrode assembly 100 to insulate the battery housing 200 and the electrode assembly 100 on the closed portion. The insulator 800 may be interposed between the closed portion of the battery housing 200 and the electrode assembly 100 or between the closed portion of the battery housing 200 and the second current collector 600. The insulator 800 may include, for example, a resin material with insulating properties. The insulator 800 may have a hole at approximately the center so that the terminal 700 can be electrically connected to the second current collector 600.

The first gasket G1 may be provided between the top cap 300 and the battery housing 200. The first gasket G1 prevents the top cap 300 and the battery housing 200 from contacting each other.

The second gasket G2 may be provided between the terminal 700 and the battery housing 200. The second gasket G2 prevents the terminal 700 and the battery housing 200 from contacting each other.

The first gasket G1 and the second gasket G2 may be made of a resin material with insulating properties and elasticity.

FIG. 9 is a diagram showing a first current collector 500 and a first protection member 400 included in the battery 10 according to an embodiment of the present disclosure.

Referring to FIG. 9, the first protection member 400 may be in contact with the first coupling portion 510 on one side of the electrode assembly 100. The first protection member 400 and the first current collector 500 may be formed integrally. According to the structure of the battery 10 as described above, the first electrode 110, the first current collector 500, the first protection member 400, and the battery housing 200 have the same polarity, so there is no problem even if they are electrically connected. Therefore, the first current collector 500 and the first protection member 400 are formed as one piece, making the production and assembly process easier.

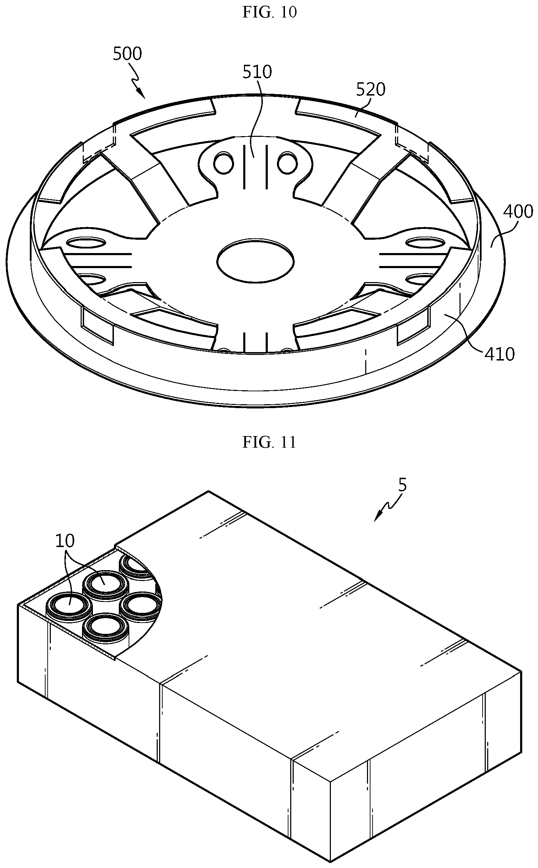

FIG. 10 is a diagram showing a first current collector 500, a first protection member 400 and a second protection member 410 included in the battery 10 according to another embodiment of the present disclosure.

Referring to FIG. 10, the second protection member 410 may be provided with a groove in a portion corresponding to the housing coupling portion 520. Since the housing coupling portion 520 extends from the electrode assembly 100 to the upper part of the beading portion 210, it must be easy to move in the height direction. Accordingly, an approximately rectangular groove is formed in the second protection member 410 in a portion corresponding to the housing coupling portion 520 to facilitate movement of the housing coupling portion 520 in the height direction.

FIG. 11 is a diagram showing a battery pack 5 according to the present disclosure.

Referring to FIG. 11, the battery pack 5 according to the present disclosure may include the battery 10. The battery pack 5 may further include various components other than the battery 10, such as BMS, busbar, pack case, relay, current sensor, etc. known at the time of filing the present disclosure..

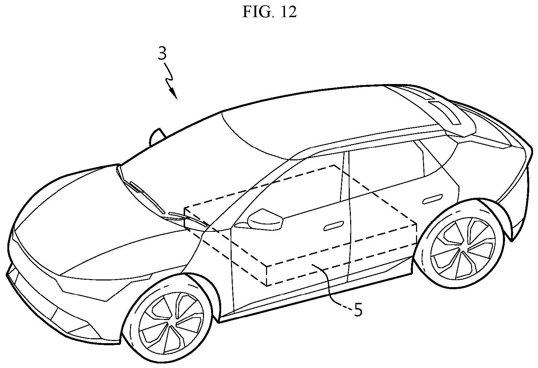

FIG. 12 is a drawing showing a vehicle 3 according to the present disclosure.

Referring to FIG. 12, the vehicle 3 according to the present disclosure may include the battery pack 5. The vehicle 3 may be a hybrid vehicle 3 or an electric vehicle 3. The vehicle 3 according to the present disclosure further includes various other components included in the vehicle 3 in addition to the battery pack 5. For example, the vehicle 3 according to the present disclosure may further include a vehicle body, a motor, and control devices such as an ECU (electronic control unit) in addition to the battery pack 5 according to the present disclosure.

As described above, the present disclosure has been described with a focus on preferred embodiments with reference to the accompanying drawings, but it is clear to those skilled in the art that many various obvious modifications can be made from this description without departing from the scope of the present disclosure. Accordingly, the scope of the present disclosure should be construed in terms of the appended claims to include such many modified examples.

### [Reference numerals]

3 vehicle
5 battery pack
10 battery
100 electrode assembly
100' stack
110 first electrode
111 first active material coating layer
112 first uncoated portion
120 second electrode
121 second active material coating layer
122 second uncoated portion
130 separator
200 battery housing
210 beading portion
220 crimping portion
300 top cap
310 venting portion
400 first protection member
410 second protection member
500 first current collector
510 first coupling portion
520 housing coupling portion
600 second current collector
700 terminal
800 insulator
G1 first gasket
G2 second gasket

## Claims

1. A battery, comprising:
an electrode assembly;
a battery housing having an opening formed on one side to accommodate the electrode assembly through the opening and including a beading portion formed by press-fitting the perimeter of an outer circumference at the opening;
a top cap configured to cover the opening; and
a first protection member interposed between the beading portion and the electrode assembly.

2. The battery according to claim 1, wherein the first protection member contains a heat-resistant material.

3. The battery according to claim 1, wherein the first protection member has an outer diameter that is substantially the same as the inner diameter of the battery housing.

4. The battery according to claim 1, wherein the first protection member has a center hole.

5. The battery according to claim 4, wherein the first protection member has a width corresponding to the depth at which the beading portion is press-fitted.

6. The battery according to claim 1, wherein the first protection member extends along the circumferential direction of the battery housing.

7. The battery according to claim 4, wherein the center hole of the first protection member has a diameter that is substantially the same as the inner diameter of the battery housing in the area where the beading portion is formed.

8. The battery according to claim 1, further comprising a first current collector, which includes a first coupling portion electrically coupled to the electrode assembly at the opening; and a housing coupling portion that is electrically coupled to the battery housing.

9. The battery according to claim 8, wherein the first coupling portion is in contact with the first protection member on one side of the electrode assembly.

10. The battery according to claim 8, wherein the first current collector is formed integrally with the first protection member.

11. A battery pack, comprising the battery according to any one of claims 1 to 10.

12. A vehicle, comprising the battery pack according to claim 11.
